# EUROPEAN PATENT SPECIFICATION

(11) **EP 4 388 279 B1**
(45) Date of publication and mention of the grant of the patent: **06.05.2026**
(21) Application number: 22730524.0
(22) Date of filing: 26.05.2022
(51) Int. Cl.: G01C 19/5733, G01C 19/5747, G01C 19/574

(54) **ANGULAR RATE SENSORS**
WINKELGESCHWINDIGKEITSSENSOREN
CAPTEURS DE VITESSE ANGULAIRE

(30) Priority: 26.05.2021 GB 202107476
(43) Date of publication of application: 26.06.2024
(73) Proprietor: Autorient Technologies AS, 3184 Borre (NO)
(72) Inventor: LAPADATU, Daniel, 3184 Borre (NO); KVISTERØY, Terje, 3184 Borre (NO)
(74) Representative: ip21 Ltd
(86) International application number: PCT/EP2022/064371
(87) International publication number: WO 2022/248647

(56) References cited:
- CN-A- 112 739 982
- US-A1- 2010 313 657
- US-A1- 2014 260 615
- US-B2- 11 118 907

## Description

### Technical Field

Aspects of the present invention generally relate to angular rate sensors. More specifically, aspects of the present invention are directed to micro-electromechanical systems (MEMS) vibratory gyroscopes for tactical and inertial grade applications.

### Background

Angular rate sensors are known devices that directly measure angular rate, without integration in conditioning electronics. MEMS vibratory gyroscopes are a type of angular rate sensors that use a vibrating structure to determine the rate of rotation. The underlying physical principle is that a vibrating object tends to continue vibrating in the same plane even if its support rotates. The Coriolis effect causes the object to exert a force on its support, and, by measuring this force, the rate of rotation can be determined. Vibrating structure gyroscopes are simpler and cheaper than conventional rotating gyroscopes of similar accuracy. Inexpensive vibrating structure gyroscopes manufactured with MEMS technology are widely used in smartphones, gaming devices, cameras and many other applications.

Mechanical gyroscopes usually include a continuously rotating or vibrating element mounted on a gyro frame, along with a separate sense element that monitors the motion of this rotating or vibrating element. Friction is inevitably produced by a rotating mechanical element becoming an increasing problem in smaller gyroscopes and ultimately can lead to operational problems. Therefore, for MEMS gyroscopes a vibrating mechanical element is preferred.

The minimum detectable angular rate is not the only performance parameter for an angular rate sensor; there are a number of other criteria that determine the overall quality of the sensor. These parameters include: the rate noise density, bias stability, angle random walk (ARW), measurement range, scale-factor linearity, input bandwidth, power supply requirements, operation temperature range, and g-sensitivity. Out of the listed parameters, rate noise density, ARW and bias stability define the performance grade of the gyroscope.

Performance grades of gyroscope can be classified into four main groups: rate grade, tactical grade, navigation grade and space grade. MEMS vibratory gyroscopes have been successfully employed for tactical grade applications, however, there are a number of challenges faced in these developments, including: efficient use of actuation energy, the requirement of a vacuum to achieve high mechanical quality factors, mechanical crosstalk between the drive and sense modes, symmetric design of the flexures for the drive and sense modes, minimising electronic dampening, noise, repeatability of the fabrication process, stress-free reliable packaging, assembly of sensor and readout chips, and shock-survival characteristics.

Several MEMS vibratory gyroscopes use a tuning fork structure which has twin-mass architecture, where two masses oscillate in opposite directions along the drive axis. The tuning-fork configuration is robust against spurious responses due to external acceleration inputs, since the acceleration inputs cause a common deflection of the tines in the same direction, being rejected by differential readout. Some highperformance tactical-grade tuning-fork have been fabricated by micromachining of single-crystal quartz. However, micromachined quartz rate sensors require complicated electronics for temperature compensation of quartz materials and fabricating quartz sensors adds complexity. For these reasons, quartz rate sensors have been superseded by advances in silicon micromachining technologies and the integration of silicon rate sensors with readout electronics on the same chip.

More recent MEMS vibrational gyroscope angular rate sensors still have a number of design flaws that limit the performance of instruments. These include, amongst others: sense masses that are not coupled and operate independently from one another, large numbers of undesired modes due to the shape and dimensions of designs, weak actuation, insufficient frequency adjust range and insufficient quadrature compensation.

US 2010/0313657 A1 and US 11,118,907 B2 each disclose examples of prior art devices, which are very large in size and therefore present a challenge for fabrication and proper functionality. The masses and other elements that should otherwise be rigid are becoming flexible in the out of plane direction, thus compromising the functionality of the devices. Another disadvantage of these devices is that, from the presented drawings, the drive and sense modes are not entirely decoupled. Furthermore, these devices are prone to quadrature errors caused by residual orthogonal drive motion inherent to the illustrated mechanical couplings between the various masses and levers. In particular, US 11,118,907 B2 shows a U-shaped decoupling flexure that is not eliminating the residual orthogonal movement, contributing to quadrature errors. Aspects of the present invention address problems with the prior art and provide improved angular rate sensors for tactical grade and inertial applications.

### Summary of the Invention

There is provided a micro-electromechanical sensor, MEMS, device according to claim 1.

'Sense masses' are also referred to as 'sense shuttles', whilst 'drive masses' are also referred to as 'drive shuttles'. It will be appreciated that these 'shuttles' have masses but they are undesired masses that should be minimised.

Suppression of the in-phase movement of proof masses means that the anti-phase movement is left as the fundamental resonance mode of the system, which considerably improves the bias stability and ARW.

"Sense movement" refers to the vibratory movement of the proof of mass generated by the Coriolis force. Ideally, it is perpendicular to both the drive movement and the angular rate vector. The drive mode, corresponding to the anti-phase movement of the proof masses, is the fundamental one in this configuration. The drive structure function to excite and maintain drive mode oscillation.

Advantageously, the device comprises a mechanical structure that amplifies the Coriolis-induced Oy-movement (movement in the sense mode direction) of the proof masses into Ox-movement (drive-mode direction) of the sense masses. This mechanical structure has the following advantages: i) it suppresses the parasitic in-phase movement of the sense masses; ii) it amplifies the mechanical Coriolis movement and the sense actuation force (providing a particular advantage for the closed loop operating devices); and iii) it converts the Coriolis-induced Oy-movement into Ox sense movement, which prior art elements including known levers for example do not achieve. Point iii) is a particular benefit over the prior art devices, because the mechanical structure provides better mechanical decoupling between sense motion and drive motion, better rejection of vibrations and better linewidth control in the DRIE process. Advantageously, the drive and sense modes are separated from each other so that while one mode is excited the other is not affected.

The drive masses are mechanically restricted to move in the drive mode direction (x). In preferred embodiments, the mechanical structure comprises at least one supressing element. The at least one suppressing element may represent biasing means. Preferably, the suppressing element is a lever. The suppressing element may additionally comprise other elements such as a spring element; the spring may be a one dimensional spring. An advantage of including the at least one suppressing element is that the in-phase movement of the proof masses is suppressed, meaning that this mode is forcefully moved to considerably higher frequencies. In contrast, in known devices (e.g. such as Sensonor^{™} SAR10, SAR100, SAR500 devices), it is the in-phase movement that is normally the fundamental mode and, consequently, is unwillingly excited.

In a further preferred embodiment, the mechanical decoupler is pronged. Preferably, the mechanical decoupler comprises a (decoupling) spring, more preferably a Psishaped spring. Preferably, the mechanical decoupler is three-pronged. The mechanical decoupler is used to decouple the translational movement of the drive masses from the rotational movement of the vertical drive frames.

In a further dependent aspect, the drive and sense modes are respectively parallel to the substrate plane. This provides "in-plane movement". The device measures angular rate; the device comprises a substrate, and the z-axis is perpendicular to the substrate plane (wafer plane). The "wafer plane" is the plane of the wafer in which the MEMS structures (masses, beams, frames, anchors etc are manufactured). The z axis is defined as an axis perpendicular to the wafer plane.

The device represents a tune-fork vibratory gyroscope with decoupled drive and sense modes, in combination with in-plane linear movement for both the drive and sense modes. "In-plane" movement refers to movement occurring within the (wafer) substrate plane; this is in contrast to "out-of-plane" movement which occurs outside the (wafer) plane. In-plane linear drive and sense movement provides a number of advantages over out-of-plane alternatives. In particular, the in-plane linear drive and sense movement of the angular rate sensor allows large amplitudes of movement, advantageously achieving a much higher sensitivity to Coriolis forces compared to out-of-plane alternatives.

In a dependent aspect, the first vibratory structure comprises electrodes for quadrature error compensation.

In a dependent aspect, the second vibratory structure comprises a first plurality of electrodes for sense detection and a second plurality of electrodes for sense actuation. In an alternative dependent aspect, the second vibratory structure comprises a plurality of electrodes arranged to operate for a first time period (most of the time) as actuation electrodes, the same plurality of electrodes being arranged to operate for a second time period, shorter than the first time period, as detection electrodes. This arrangement is referred to as "time multiplexing".

In a dependent aspect, at least one of the drive structures comprises at least one spring for suppressing the movement of the at least one drive structure in sense mode direction (y).

In alternative aspects, the at least one of the drive structures comprises a drive connector and a drive decoupling spring for decoupling the at least one drive structures from the drive connector. In other words, the translational movement of the drive masses is decoupled from the vertical movement of the drive structures.

In a further alternative aspect, at least one of the drive structures comprises a drive-connector spring for suppressing the movement of the at least one drive structure in sense mode direction (y) whilst allowing in-plane rotation of the drive connector. In effect, the in-phase movement of the proof masses is suppressed. For example, the at least one of the drive structures comprises an L-shaped decoupling spring.

In effect, the spring elements of the drive structures, particularly in combination, ultimately allow for the suppression of in-phase movement of the drive, proof and sense masses, so that parasitic modes are advantageously rejected.

In a dependent aspect, at least one of the drive structures comprises an anchor structure, the anchor structure comprising at least one anchor for supressing the-in phase movement of the at least one drive structure. In a further dependent aspect, the anchor structure further comprises at least one anchor for suppressing the movement of the sense masses in the sense mode direction (y). Preferably, anchor structures have anchor posts fixed to the substrate.

### Brief Description of the Drawings

Aspects of the present invention will now be described, by way of example only, with reference to the accompanying Figures, in which:
Figure 1 is a schematic representation of an angular rate sensor;
Figure 2A shows the cross-bar springs and drive-decoupling springs;
Figure 2B shows the drive-connector springs and L-decoupling springs;
Figure 2C shows the proof mass springs, central guiding springs and connector;
Figure 3A shows the drive movement of the angular rate sensor, illustrating how the mechanical decoupling from the sense movement is achieved;
Figure 3B shows the sense movement of the angular rate sensor, illustrating how the mechanical decoupling from the drive movement is achieved;
Figure 4 highlights the upper driver mass of the angular rate sensor;
Figure 5 shows an example configuration of the drive blocks in the angular rate sensor;
Figure 6 shows an example configuration of the drive blocks and shape of the drive mode of the angular rate sensor;
Figure 7 shows the drive-connector block with illustration of the displaced position;
Figure 8 shows an example proof mass block;
Figure 9 highlights the right sense mass of the angular rate sensor;
Figure 10 illustrates the shape of the sense mode;
Figure 11 highlights the upper proof mass of the angular rate sensor;
Figures 12A and 12B show the conversion of the Coriolis-induced Oy-movement of the proof masses into Ox-movement of the sense masses;
Figure 13 highlights the right seesaw beam of the angular rate sensor;
Figure 14 shows the cross sectional view of the C-SOI wafer employed in one embodiment of the angular rate sensor;
Figure 15 shows a possible configuration of the angular rate sensor with the location of the electrical blocks;
Figure 16 is a schematic representation of an angular rate sensor according to a preferred embodiment;
Figure 17 is a schematic representation of the mechanical converter used in the angular rate sensor of Figure 16;
Figure 18 shows a manufactured angular rate sensor according to the preferred embodiment of Figure 16;
Figure 19 is a schematic representation illustrating the drive motion fully decoupled from the sense motion;
Figure 20 illustrates finite element method (FEM) electrotechnical modelling of the drive motion;
Figure 21 is a schematic representation of the sense motion fully decoupled from the drive motion;
Figure 22 illustrates finite element method (FEM) electrotechnical modelling of the sense motion;
Figures 23A and 23B show a mechanical converter used in the preferred embodiment, illustrating the conversion of the Coriolis-induced Oy-movement of the proof masses into Ox-movement of the sense masses;
Figure 24 illustrates an example implementation of the mechanical converter used in the preferred embodiment;
Figure 25 is a schematic illustration of residual error movement at the end of a drive mode lever;
Figure 26 shows an example implementation of a drive mode lever used in the preferred embodiment
Figure 27 is a FEM illustration of the in-phase motion of the sensor according to the preferred embodiment;
Figure 28 is a schematic representation of an angular rate sensor according to a further embodiment; and
Figure 29 shows the cross sectional view of the C-SOI wafer employed in a preferred embodiment.

### Detailed Description

### Components of the Angular Rate Sensor

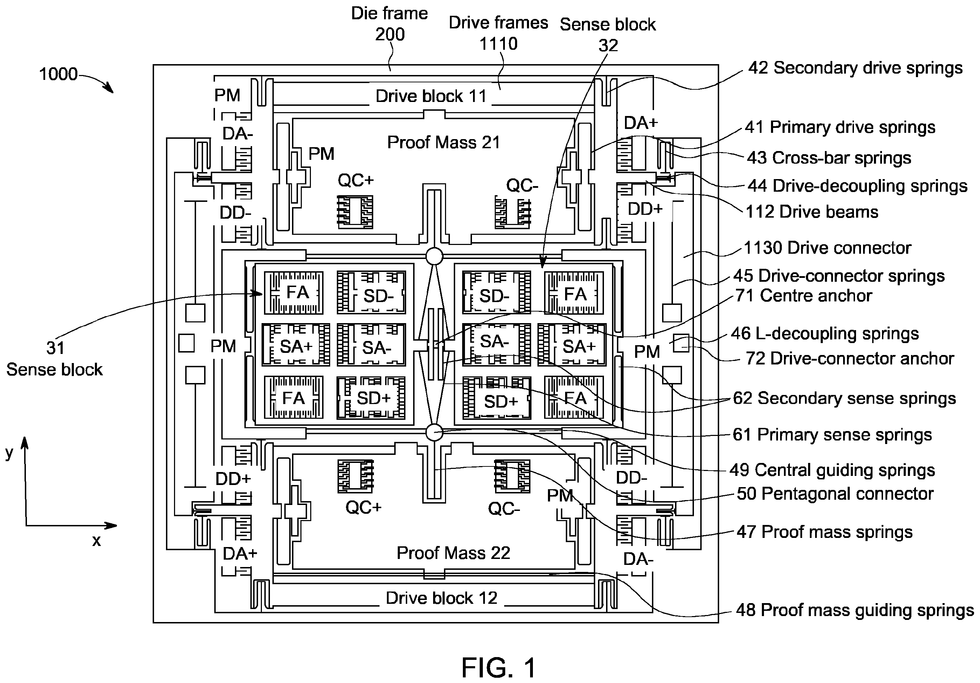

An angular rate sensor 1000, is shown in Figure 1. An angular rate sensor may be defined as a single die element that responds to the angular rate input signal, i.e. it measures a change in angular velocity about an axis (the z axis). In the described embodiment example, the angular rate sensor uses an ASIC; an example of such as ASIC is SWS1121 manufactured by Si-Ware Systems, but it will be appreciated that other suitable alternative electronics may be employed.

With reference to Figure 1, the sensor 1000 comprises moveable elements referred to as "blocks": drive blocks 11, 12, proof mass blocks 21, 22 and sense blocks 31, 32. It will be appreciated that the number of the elements (blocks) may vary in alternative configurations. Each of these elements have movement along the x axis (Oxtranslation), whilst the proof mass blocks 21, 22 also have movement along the y axis (Oy- translation). The x axis is the direction of the wafer plane that is along the drive movement. The y direction is the direction within the wafer plane that is perpendicular to the drive movement, usually but not necessarily the direction of the sense movement.

In this example, the drive blocks 11, 12 have positive and negative drive actuation electrodes (DA) and positive and negative drive detection electrodes (DD). However, depending on the ASIC used, the DA and DD electrodes can be merged; in such a case, actuation and detection is achieved by time multiplexing, i.e. most of the time the electrodes are operating in the "actuation" mode, while for shorter times they operate in "detection" mode. In this example, each drive block 11, 12 includes drive frames 1110, drive (seesaw) beams 1120 and drive connectors 1130. A "drive frame" may be defined as a mechanical structure that connects and synchronises all drive elements, as well as provides increased stiffness for out-of-plane movement.

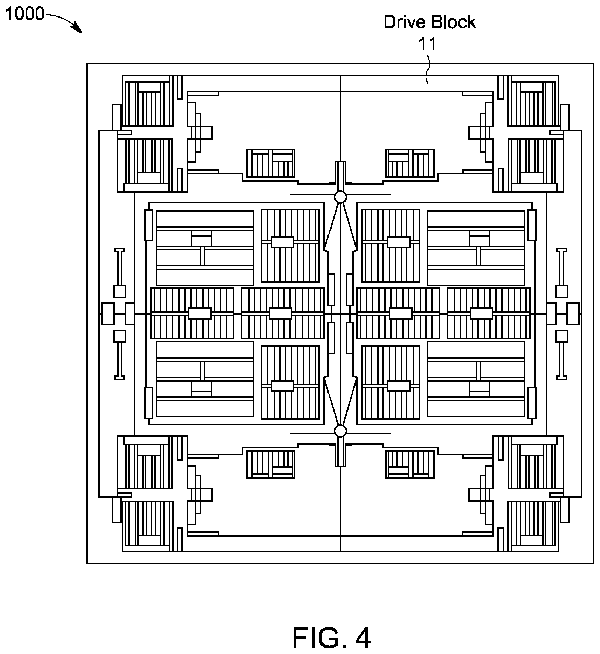

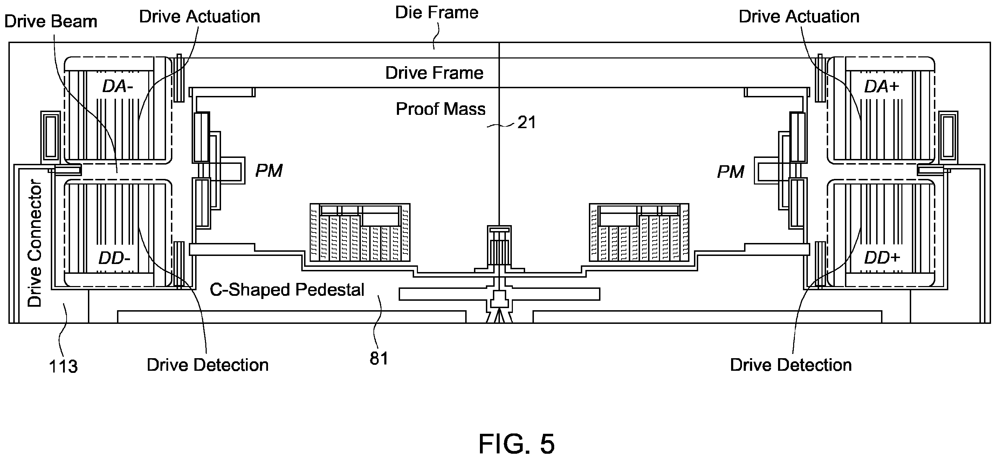

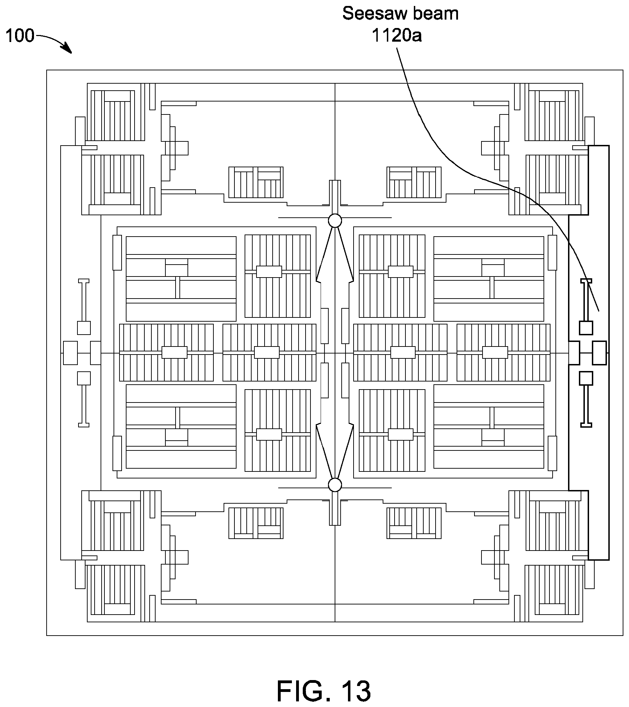

In this example there are two drive blocks, 11, 12, one for each proof of mass. For reference, the upper drive block 11 is highlighted in Figure 4 and the right seesaw beam 1120a is highlighted in Figure 13. The drive blocks 11, 12 function to excite and maintain the drive mode oscillation. With reference to Figure 5, which shows an example layout of a drive block in more detail), within each block there are two actuation electrodes DA+ and DA-, and two detection electrodes DD+ and DD-.

In this example, the proof mass blocks 21, 22 are arranged symmetrically, located at either end of the angular rate sensor. They include quadrature error (Q-offset) compensation electrodes (QC+ and QC-) as well as mass frames and electrodes (PM).

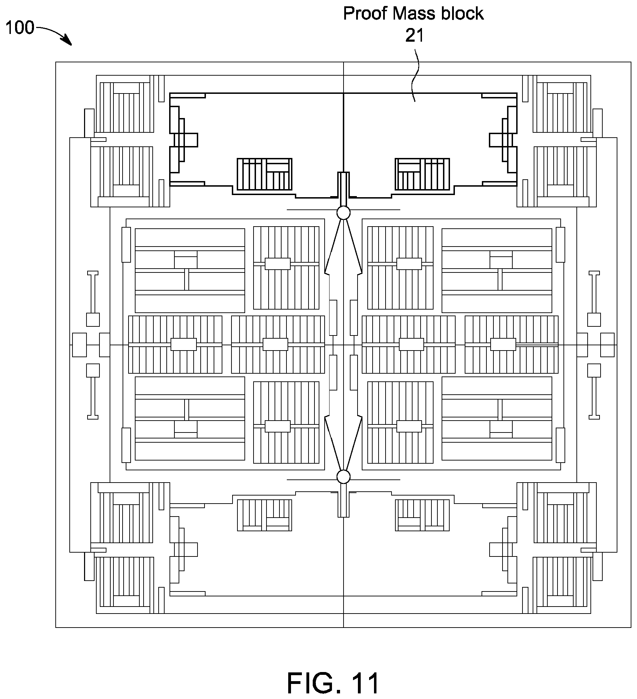

For reference, the upper proof mass block 21 is highlighted in Figure 11. The two proof mass blocks 21, 22 detect the Coriolis force and excite the sense blocks 31, 32.

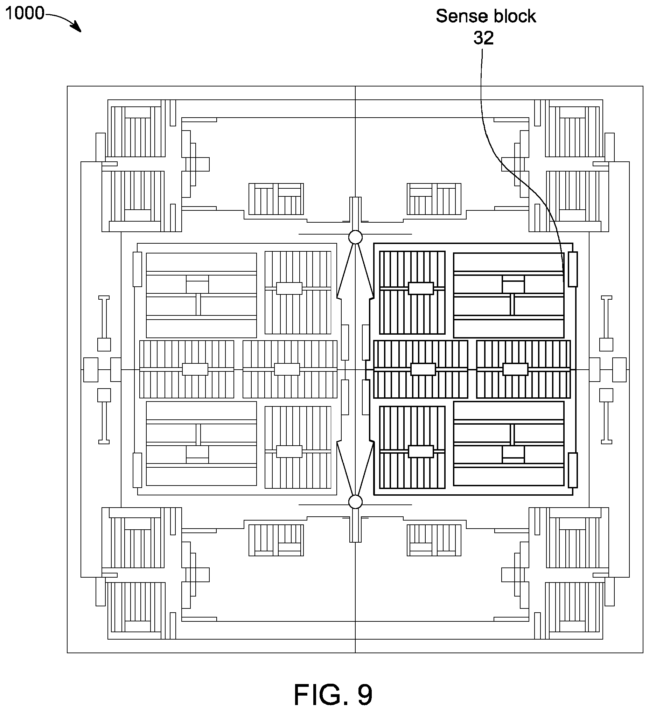

In this example, the sense blocks 31, 32 are located centrally in the angular rate sensor in a symmetrical arrangement. For reference, the right sense block 32 is highlighted in Figure 9. Each sense block 31, 32 comprises a plurality of electrodes including the following static electrodes, attached the device substrate: frequency adjustment electrodes (FA; also referred to as F-adjust electrodes), sense actuation electrodes (SA+/SA-) and sense detection electrodes (SD+/SD-). The sense blocks 31, 32 convert the sense mode oscillations induced by the Coriolis force into electrical signals.

In alternative examples, depending on the ASIC used, the SA+ and SA- electrodes can be merged; in such a case, actuation and detection is achieved by time multiplexing, i.e. most of the time the electrodes are operating in the "actuation" mode, while for shorter times they operate in "detection" mode.

The angular rate sensor 1000 further comprises a plurality of biasing means. In this example, primary drive springs 41 serve as the main element to define the drive mode frequency (Ox-deformation). Secondary drive springs 42 block the Oy-movement of the drive blocks 11, 12 and have a role in partly defining the drive mode frequency. Cross-bar springs 43 also block the Oy-movement of the drive blocks 11, 12 and have a role in partly defining the drive mode frequency. Drive-decoupling springs 44 advantageously decouple the drive beam 1120 and drive connector 1130 to allow the drive connector 1130 to move in the Oy-direction (while rotating around the drive connector anchors 72). A "sense frame" may be defined as a mechanical structure that connects and synchronises all sense elements.

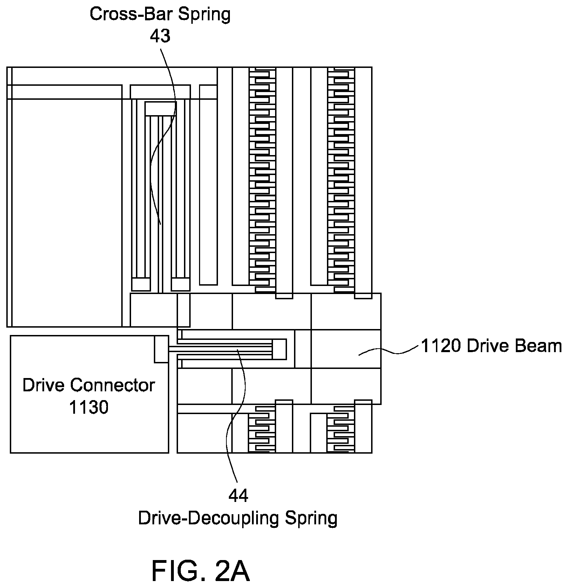

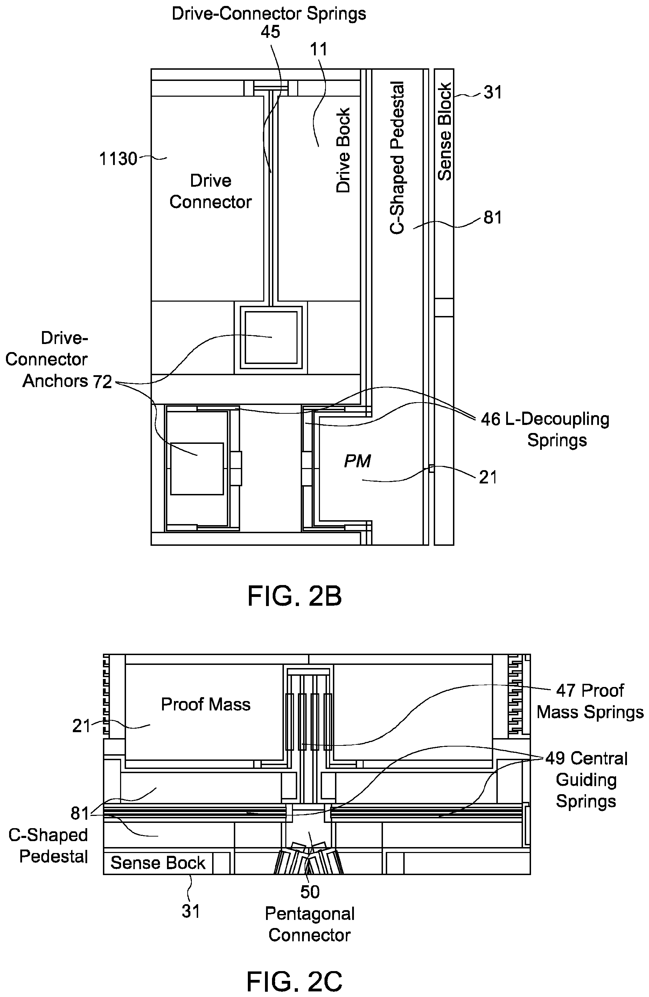

Figure 2A shows in more detail an arrangement of drive cross-bar springs 43 and drive-decoupling springs 44. With reference to Figure 2B, drive-connector springs 45 allow in-plane rotation of the drive connectors 1130. L-decoupling springs 46 function to reduce the stress caused by the in-plane rotation of the drive connectors 1130. The elements of this example configuration all ultimately allow the suppression of in-phase movement of the drive, proof and sense masses, so that parasitic modes are advantageously rejected.

Proof mass springs 47 serve to transfer the Coriolis Oy-movement of the proof mass blocks 21, 22 to the sense blocks 31, 32 partly defining the drive mode frequency. Proof mass guiding springs 48 serve to synchronise the Ox-movements of the drive block elements. Central guiding springs 49 block the Ox-movement of the connectors 50 (which in this example is pentagonal).

Primary sense springs 61 convert and amplify the Coriolis Oy-movement of the proof mass into Ox-movement of the sense blocks 31, 32 and define the sense mode frequency. Secondary sense springs 62 block the Oy-movement of the primary sense springs 61 and have a role in partly defining the sense mode frequency. The connector 50, shown in more detail in Figure 2C, rigidly connects to the proof mass springs 47, central guiding springs 49 and primary sense springs 61.

The angular rate sensor 1000 comprises a plurality of frames as shown in Figure 1. The drive frames form part of the drive blocks 11, 12 and synchronise the Ox-movements of the drive block elements 11, 12. The drive connector 1130 also forms part of the drive blocks 11, 12 and synchronises the Ox-movements of the upper and lower drive blocks, whilst the drive beam 1120 functions as the rigid structure of the drive block 11, 12.

The angular rate sensor 1000 further comprises a number of "anchors". An anchor is a mechanical structure that is rigidly attached to the substrate of the device on which no electrical signals are applied. Drive-connector anchors 72 tether the central area of the drive connectors 1130 to supress the in-phase movement of the drive blocks 11, 12. At least one central anchor 71 tethers the central point of the die to supress the Oy-movement of the sense blocks 31, 32.

A number of electrodes are included in the angular rate sensor 1000. Drive actuation, drive detection, sense actuation, sense detection, Q compensation and F-adjust electrodes have been described above. In addition to these, the angular rate sensor 1000 shown in the present example comprises a plurality of proof mass electrodes (PM) which are rotors (i.e. they are moveable electrodes), which each include two C-shaped pedestals 81 that anchor the secondary drive springs, the central guiding springs 49, and the secondary sense springs. In some embodiments, the central anchor 71 can also be used as a PM-electrode for reducing the proof mass series resistance. The angular rate sensor 1000 also optionally comprises at least one die frame 200 (electrical ground) which is situated at the periphery of the die, as an anchoring structure for secondary drive springs and cross-bar springs; the die frame 200 may be a stator (i.e. a static electrode attached to the substrate).

In an example, an angular rate sensor 1000 represents a tune-fork vibratory gyroscope with decoupled drive and sense modes, with in-plane linear movement for both the drive and sense modes. "In-plane" movement refers to movement occurring within the (wafer) plane defined by a mass-beam system; this is in contrast to "out-of-plane" movement which occurs outside the (wafer) plane defined by the mass-beam system. "Sense movement" refers to the vibratory movement of the proof of mass generated by the Coriolis force. Ideally, it is perpendicular to both the drive movement and the angular rate vector.

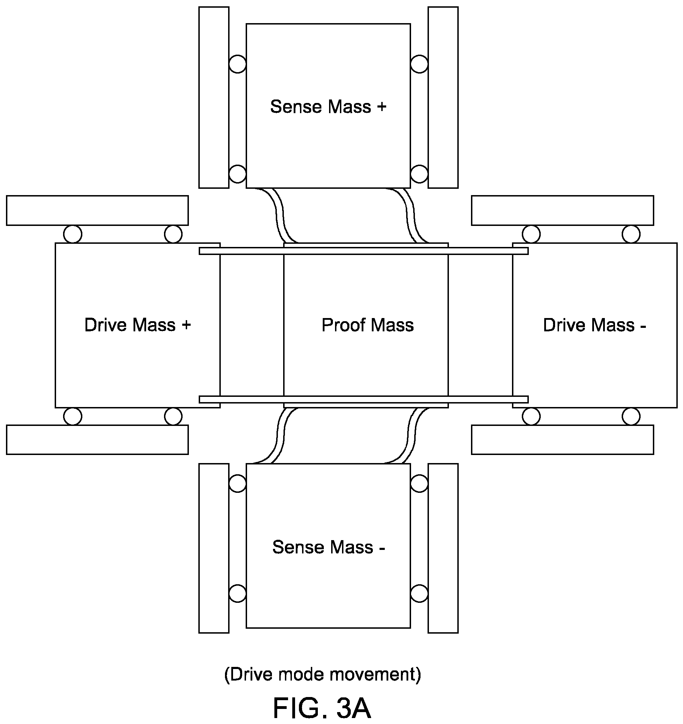

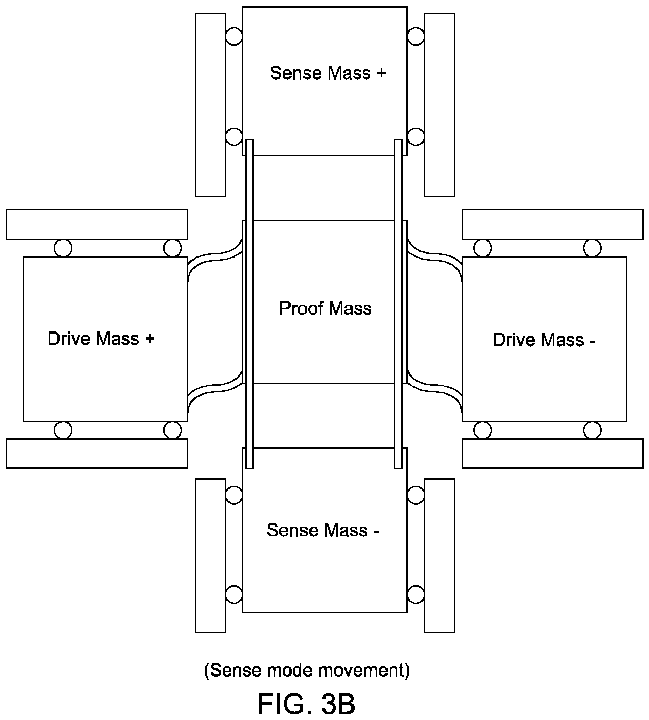

The schematic decoupling of the drive and sense modes, achieved by means of specially designed suspension systems, is illustrated in Figures 3A and 3B, respectively. In-plane linear drive and sense movement provide a number of advantages to the angular rate sensor over out-of-plane alternatives. For example, the in-plane linear drive and sense movement of the angular rate sensor allows large amplitudes of movement, advantageously achieving a much higher sensitivity to Coriolis forces compared to out-of-plane alternatives. In-plane linear drive and sense movement also means that the angular rate sensor does not require electrodes on the capping wafers, resulting in a simpler processing sequence, higher stability device (since similar materials can be used) and considerably lower parasitic capacitances to out-of-plane alternatives. Furthermore, the suspension systems of in-plane movement systems used in the angular rate sensor 1000 are more robust to quadrature errors generated by fabrication imperfections than those of out-of-plane alternatives. Additionally, the structure of an in-plane movement system is very robust to crystal orientation, since both drive and sense modes operate in bending.

Furthermore, in the decoupled design of the angular rate sensor 1000, drive and sense modes are separated from each other so that while one mode is excited the other is not affected. In this case, several inertial masses are required in the basic structure of the device shown in Figures 3A and 3B. An advantage of the decoupled design of the angular rate sensor 1000 is the reduction of crosstalk between drive and sense modes of the gyroscope and, consequently, a huge rejection of the quadrature signals.

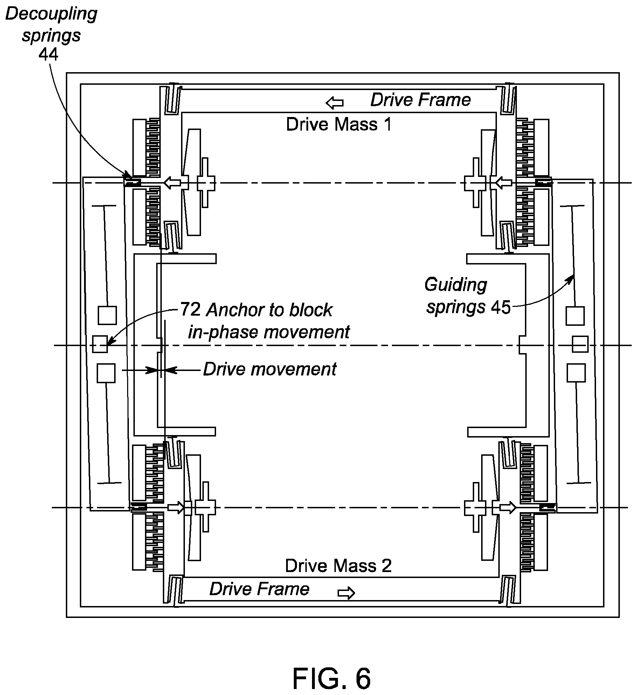

The angular rate sensor 1000 comprises two drive blocks 11, 12 (one for each proof mass 21, 22), each containing a drive mass (Mass 1, Mass 2) that is mechanically restricted to only move in the Ox-direction, as shown in Figure 6A. Each drive mass is actuated by means of the drive actuation electrodes (DA+ and DA-). Once the drive mode is excited, the drive amplitude is measured capacitively by means of the drive detection electrodes (DD+ and DD-). The drive mode, corresponding to the anti-phase movement of the proof masses 21, 22, is the fundamental one in the angular rate sensor 1000. This is achieved by in-phase movement of the proof masses being supressed in the angular rate sensor 1000.

### Drive Block

With reference to Figure 6, the function of depicted elements of the drive blocks of the angular rate sensor 1000 are described. The guiding springs representing drive connector springs 45 supress movement in the Oy-direction, while allowing the movement in the Ox-direction, whilst the primary drive springs 41 function to define the frequency of the drive mode. The decoupling springs 44 are used to decouple the translational movement of the drive masses (Mass 1, Mass 2) from the rotational movement of the vertical drive frames. Rigid drive frames are employed to keep the movement of the drive masses (Mass 1, Mass 2) in synchronisation. Central anchors are employed to block the in-phase movement of the drive masses, while allowing the anti-phase movement of the drive masses (Mass 1, Mass 2), illustrated in Figure 6.

Advantageously, the drive mode, which corresponds to the anti-phase movement of the two coupled proof masses 21, 22 is also the fundamental mode of the structure. This is achieved by the coupling spring system 45, 44, 72 of the drive mode described above, designed in such a way that the in-phase movement of the proof masses is suppressed. The displacement of the guiding springs 45 is exaggerated in the depiction to illustrate their operation principle in the angular rate sensor 1000.

The actual implementation in the angular rate sensor may differ from the illustration.

The angular rate sensor 1000 would preferably employ a carefully selected number of fingers and capacitor gaps to provide optimum actuation for the selected ASIC; it will be appreciated that these parameters may be altered in response to the use of an alternative ASIC. The frequency adjust range is advantageously optimised by the quantity of frequency adjust fingers and capacitor gaps.

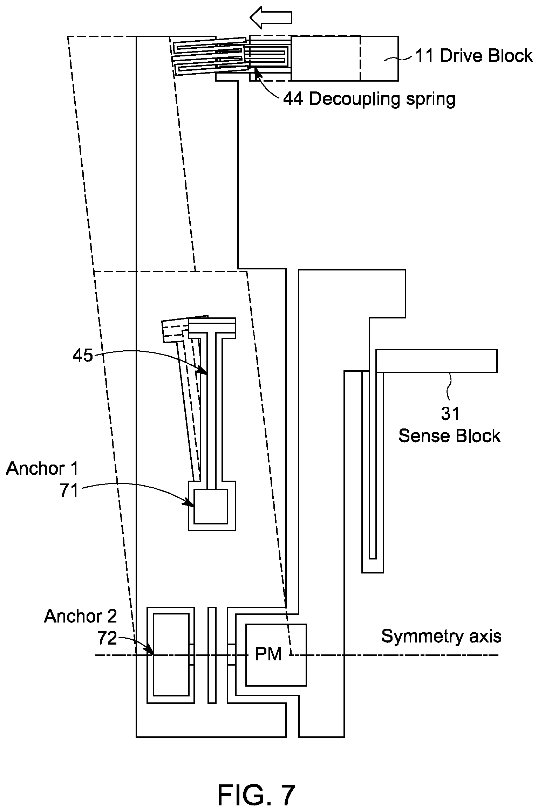

Figure 7 is a depiction of half of the drive connector block with the relevant geometrical elements clearly indicated. The displaced position of the drive-connector block caused by the drive movement of the angular rate sensor 1000 is depicted by the dashed line. "Drive movement" is the vibratory movement to which the proof mass of the device is subjected in order to become sensitive to Coriolis forces. The actual implementation may differ from the illustration. The main role of the drive connector block is to mechanically connect and synchronize the movement of the two drive blocks of the angular rate sensor 1000.

The drive decoupling springs 44 advantageously allow the rotation of the drive-connector block while the drive block remains constrained to move only in the Ox-direction. The first anchor 71 allows the deflection of the drive-connector block in the Ox-direction and the second anchor 72 tethers the middle of the drive-connector block, thus supressing the in-phase movement, while still allowing the anti-phase movement of the drive masses in the angular rate sensor 1000.

### Proof Mass Blocks

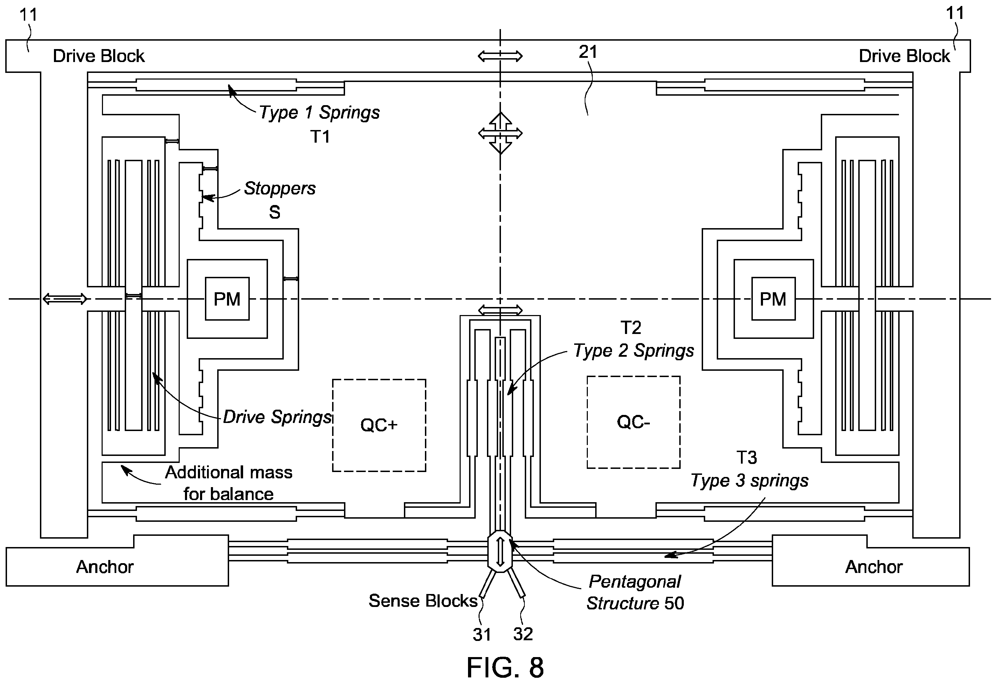

Figure 8 illustrates in more detail a proof mass block 21 of the angular rate sensor 1000 (which had been highlighted in Figure 11), with the relevant geometrical elements clearly indicated; the double ended arrows illustrate spaces that are required to be larger than the drive amplitude by the present invention.

It will be appreciated that the actual implementation of the proof mass block 21 in the present invention may differ from the illustration. The illustrated design of the proof masses provides a rigid structure.

The proof mass, in the presence of Oz-oriented angular rates, picks up the Oy-oriented Coriolis force when driven in the Ox-direction. The drive springs define the frequency of the drive mode and allow the drive movement to be passed to the proof mass. In this example, type 1 springs (T1), stiff in the Ox-direction, are used to allow the proof mass move in the Oy-direction in the presence of Coriolis forces. Type 2 springs (T2), stiff in the Oy-direction, are used to allow the proof mass move in the Ox-direction and push/pull the connector 50 along the Oy-direction. Type 3 springs (T3), stiff in the Ox-direction, are used to allow the connector 50 to move in the Oy-direction while supressing its rotation and movement in the Ox-direction. The connector 50 is a mechanical connector employed to transmit the Oy-oriented Coriolis movement of the proof mass to the sense blocks 31, 32. The quadrature compensations blocks (QC+, QC-), embedded within the proof mass 21, are employed to compensate the inherent quadrature errors of the angular rate sensor. The stoppers (S) are structures designed to limit the drive movement to a pre-established value.

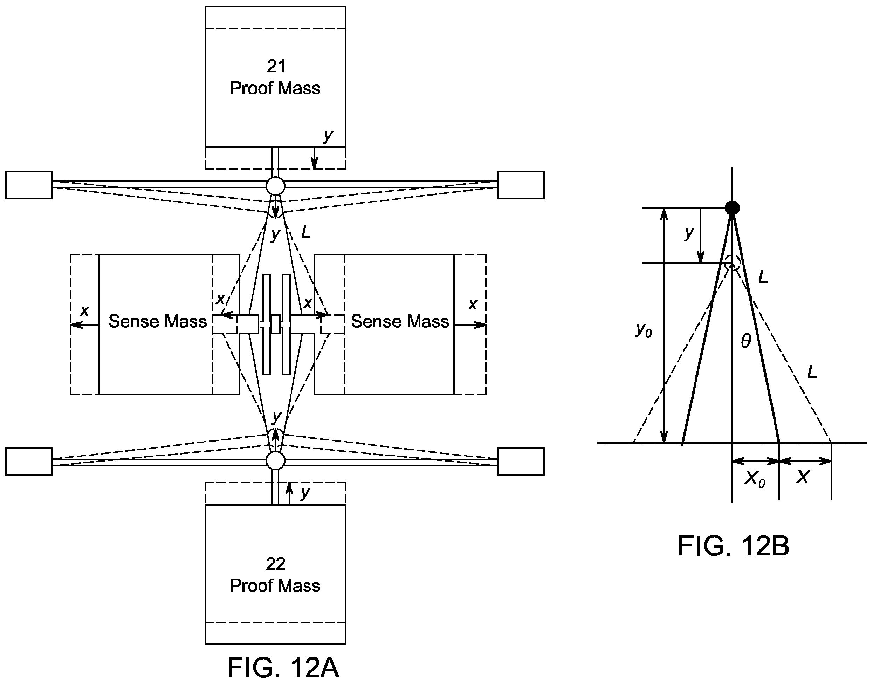

Figures 12A shows the conversion and amplification of the Coriolis-induced Oy-movement of the proof masses 21, 22 into Ox-movement of the sense masses. Figure 12B illustrates the geometry of the central spring system before (solid lines) and after (dashed lines) being displaced by the Coriolis force. Only the upper half of the central spring system is shown.

### Sense Blocks

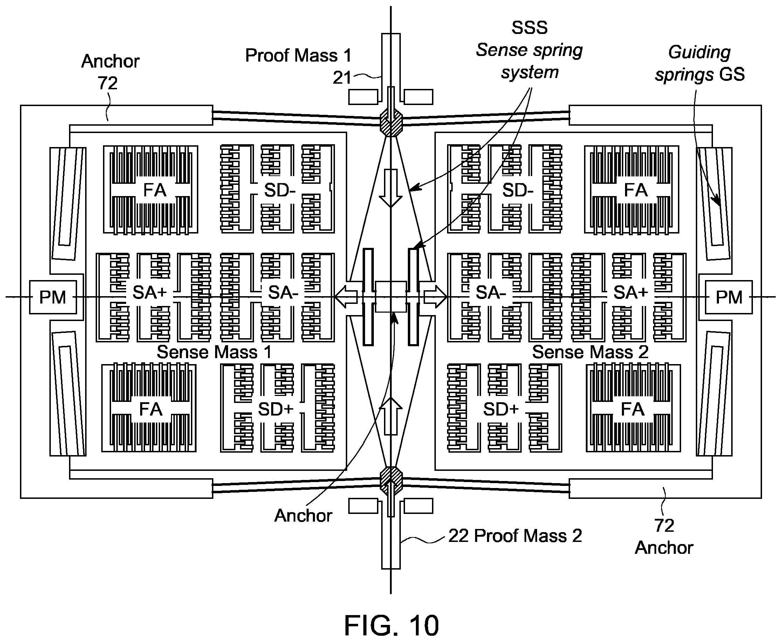

The angular rate sensor 1000 comprises of at least two sense blocks 31, 32, each containing a sense mass that is mechanically only able to move in the Ox-direction, as shown in Figure 10. Advantageously, the sense masses are mechanically coupled with in-phase movement being suppressed. The actual implementation may differ from the illustration. In operation of the angular rate sensor 1000, once the sense mode is properly excited, the sense amplitude is measured capacitively by means of the sense detection electrodes SD+ and SD-. In a close-feedback loop operation, each sense mass is actuated by means of the sense actuation electrodes SA+ and SA-. Furthermore, each sense mass comprises two embedded frequency adjust blocks.

The sense blocks 31, 32 may each comprise several elements. The guiding springs (GS) supress the movement in the Oy-direction, while allowing movement in the Ox-direction. A sense spring system (SSS) defines the frequency of the sense mode and mechanically couples the two sense masses, allowing only their reciprocal anti-phase movement, while supressing the in-phase movement. These springs may also act as a mechanical amplifier, converting the Oy-movement into a larger Ox-movement. The frequency adjustment blocks (FA), embedded within the sense masses, are employed to adjust down the sense mode resonance frequency.

The actual implementation may differ from the illustration. For simplicity, in the described embodiments, the sense actuation and the sense detection fingers and gaps have the same geometry, however this may differ in unillustrated alternative embodiments.

The actual finger design in this embodiment of the angular rates sensor may vary. Preferably, the fingers must be sufficiently rigid to avoid bending under the applied electrostatic forces. In preferred configurations, the fingers must be sufficiently rigid to avoid proper resonances below 100 kHz.

In the angular rate sensor 1000, the sense actuation blocks function in the same way as the drive actuation blocks, employing a variable-area configuration.

In this example, differential capacitance sensing, is also employed within the sense blocks of the angular rate sensor 1000. Differential detection is achieved by symmetrically placing capacitive electrodes on two opposing sides within each sense mass, such that the capacitance change in the electrodes are in opposite directions.

### Quadrature Compensation Blocks

Quadrature offset (Q-offset), also known as quadrature error, is defined as the direct coupling of the drive motion into the sense motion. There are many sources of quadrature offset. In most cases of the prior art, the quadrature offset generated by the elastic cross-coupling between drive and sense mode and the fabrication imperfections have the largest value; if left uncompensated. For out-of-plane configurations, it is typically more than 1000 °/s, which is considerably larger than the input angular rate. There are several approaches that can be employed to compensate quadrature error. Electrostatic quadrature suppression is implemented in angular rate sensor 1000, and is achieved by applying DC voltages to properly placed electrodes on the sensor die layout. By applying only DC potentials to specially designed set of fingers and with a proper feedback, the mechanical quadrature error is eliminated directly at its source.

In one example, the angular rate sensor 1000 comprises two quadrature compensation blocks embedded in each proof mass, as was shown in Figure 1.

Advantageously, the device provides optimum quadrature compensation through the number of quadrature compensation fingers and capacitor gaps. The actual implementation may differ from the illustration. In the illustrated example, bit streams are applied to the proof mass (PM), positive q-comp (QC+) and negative q-comp (QC) electrodes. Assuming that the proof mass moves in the drive direction (positive Ox-direction) for an amount of X and in the sense direction (positive Oy-direction) for a small amount y (not illustrated), where y << D0, the total force acting on proof mass in the Oy-direction can be calculated. In the present example, there are four capacitors formed between proof mass and stationary fingers, each with N_{Q}/2 pairs of fingers.

### Frequency Adjust Blocks

Matching the drive and sense mode of the angular rate sensor 1000 resonant frequencies greatly enhances the sense mode mechanical response to angular rate input. The angular rate sensor 1000 comprises of two frequency adjust blocks embedded in each sense mass 31, 32, as was shown in Figure 10. Each frequency adjust block (hereinafter also denoted "s "F-adj block") contains a set of combs. It will be appreciated that the actual implementation may differ from the illustration.

A typical approach in the prior art to "adjust the resonance frequency of the modes is to make use of the electrostatic spring effect present in the variable-gap configuration.

From the point of view of frequency adjustment range, operating at lower frequencies (e.g. between 6 and 10 kHz) is a preferred.

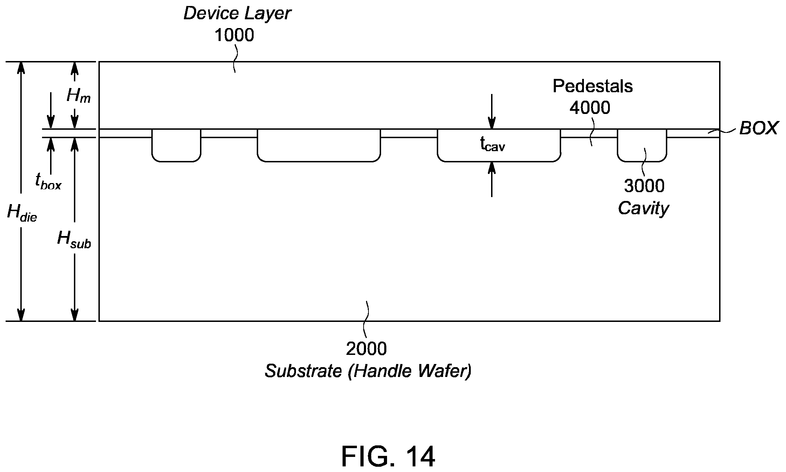

In an example, the angular rate sensor 1000 is manufactured in a Cavity-SOI (C-SOI) wafer. With reference to Figure 14, the buried oxide layer (BOX) insulates the device layer 1000 (i.e. the part of the C-SOI wafer in which the device is manufactured) from the handle-wafer (substrate) 2000 of the C-SOI wafer (i.e. the part of the C-SOI wafer used as mechanical support for the device). A device cavity 3000 is formed between pedestals 4000 of the C-SOI wafer. It will be appreciated that modifications to the angular rate sensor 1000 to accommodate different wafers are possible in alternative unillustrated embodiments.

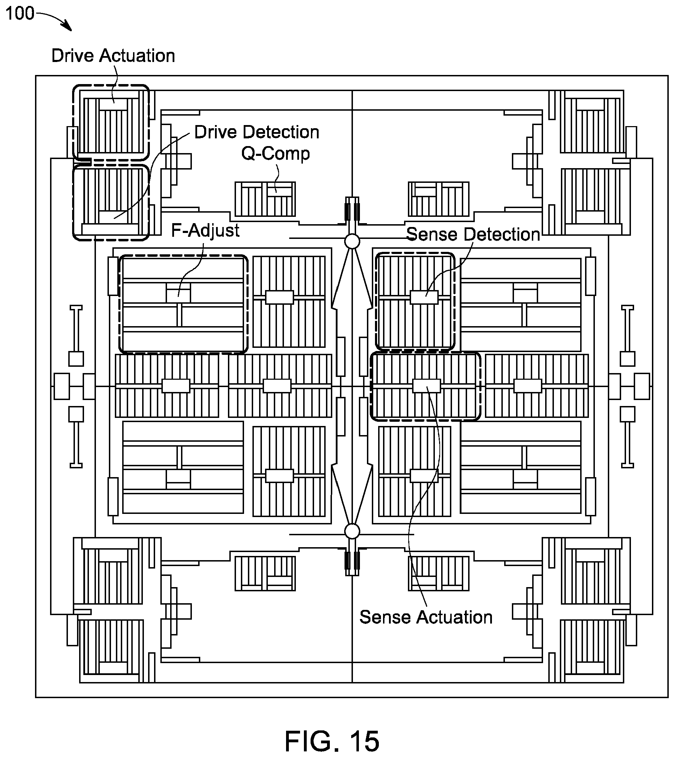

Figure 15 shows the location of the electrical blocks on an example design layout of the angular rate sensor.

The target specifications for the angular rate sensor may vary. The example angular rate sensor 1000 described above has low quadrature offset, good stability (including long term stability), robustness against vibrations and gravitation effects and high suppression/rejection of super- and subharmonic modes.

### Preferred Embodiments

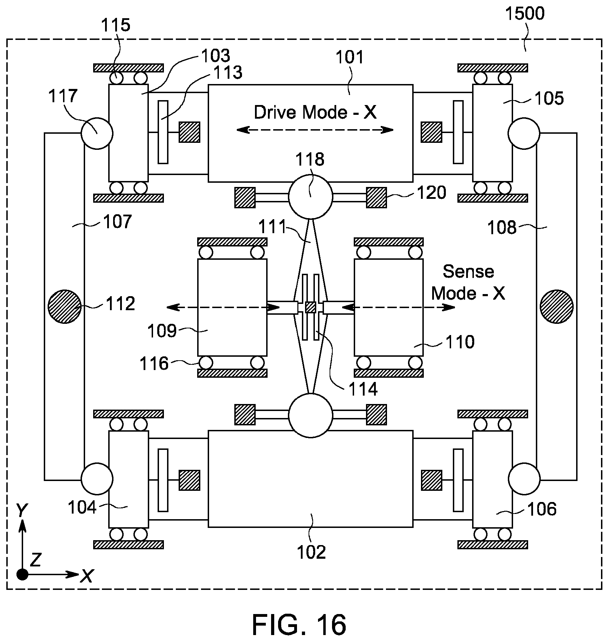

Figure 16 shows an angular rate sensor 1500 according to a preferred embodiment. The sensor 1500 comprises moveable elements including drive blocks 103-106 (also referred to as drive mode "shuttles"), proof masses 101, 102, sense blocks (also referred to as sense mode "shuttles") 109, 110, and a mechanical converter (e.g. formed of mechanical converter springs). In this embodiment, the sensor further includes drive mode levers 107, 108, having fixed pivots 112 (dark patterned discs). It will be appreciated that the number of the elements may vary in alternative configurations. Each of these elements have movement along the x axis (Oxtranslation), whilst the proof masses 101, 102 also have movement along the y axis (Oy- translation).

In this embodiment, movable pivots 118 (white discs) are provided to function as push-pull structures. In addition pivots 117 are provided to function as a mechanical decoupler 117 between the drive blocks and the drive mode lever 107, 108. Anchors 120 and fixed frames are also provided (black patterned rectangles).

In this example, which is a preferred embodiment of the invention, there are four drive blocks 103, 104, 105 and 106 each functioning to excite and maintain the drive mode oscillation. The proof masses 101, 102 are arranged symmetrically, located at either end of the angular rate sensor. The two proof masses 101, 102 detect the Coriolis force and excite the sense blocks 109, 110. The sense blocks 109, 110 are located centrally in the angular rate sensor in a symmetrical arrangement. The sense blocks 109, 110 convert the sense mode oscillations induced by the Coriolis force into electrical signals.

The angular rate sensor 1500 further comprises a plurality of biasing means. In this example, primary drive mode springs 113 serve as the main element to define the drive mode frequency (Ox-deformation). Secondary drive springs (i.e. sense mode springs) 114 block the Oy-movement of the drive blocks 103, 104, 105 and 106 and have a role in partly defining the drive mode frequency. In this embodiment, the angular rate sensor 1500 further comprises drive mode Ox-guiding flexures 115 to block the Oy-movement of the drive blocks 103, 104, 105 and 106 and sense mode Ox-guiding flexures 116 to block the Oy-movement of the sense blocks 109, 110.

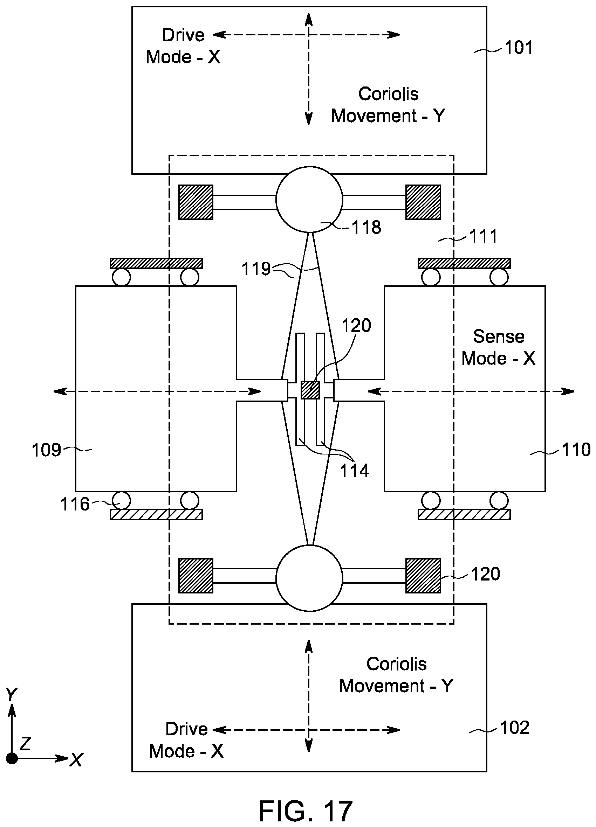

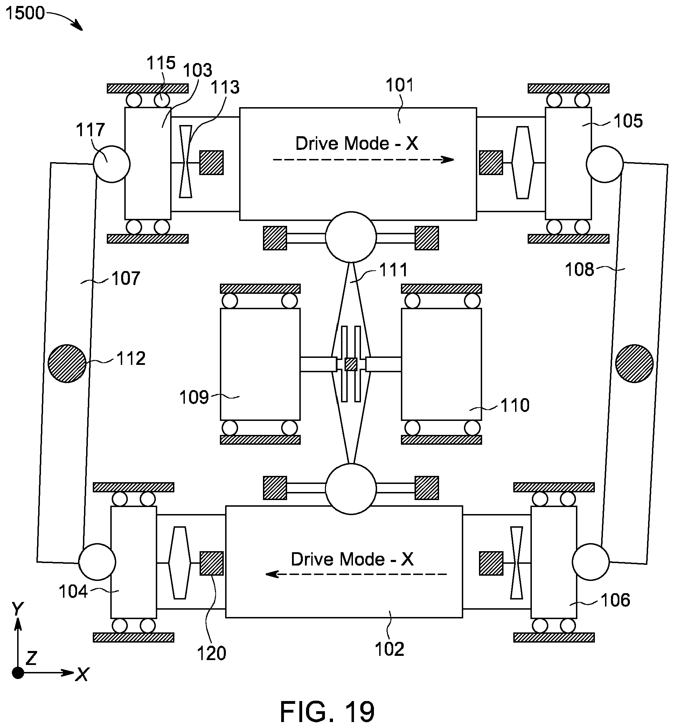

Figure 17 is a schematic representation of the mechanical converter 111 used in the angular rate sensor of Figure 19, shown in more detail, comprising mechanical converter springs 119. This type of mechanical converter is illustrated for example in Ke-qi Qi, Yang Xiang, Chao Fang, Yang Zhang, Chang-song Yu, Analysis of the displacement amplification ratio of bridge-type mechanism, Mechanism and Machine Theory, Volume 87, 2015, Pages 45-56.

Anchor 120 tethers the die to supress the Oy-movement of the sense blocks 109, 110. The mechanical converter 111 further comprises pivots 118, known as proof mass Oy-guiding flexures.

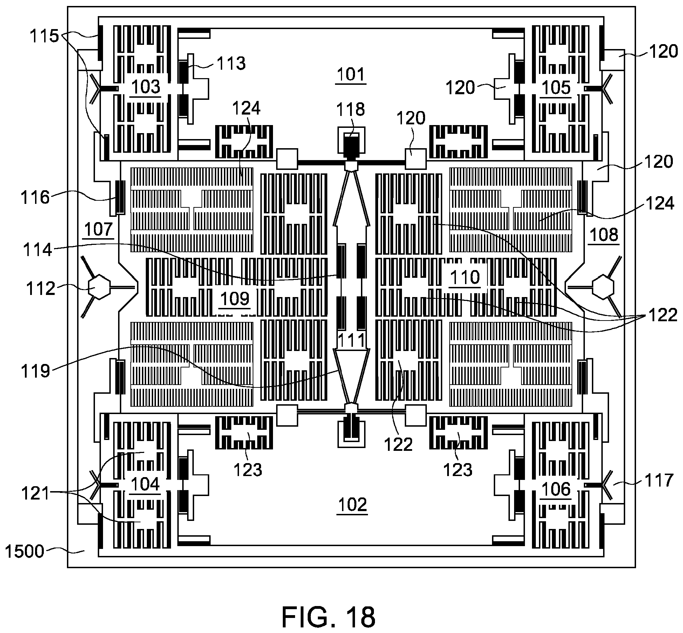

Figure 18 shows a manufactured angular rate sensor 1500 according to the preferred embodiment of Figure 19. It can be seen from this figure that the sensor 1500 includes drive mode actuation and detection electrodes 121. The proof masses 101, 102 include quadrature error (Q-offset) compensation electrodes 123.

The two proof masses 101, 102 detect the Coriolis force and excite the sense blocks 109, 110. In this embodiment, each sense block 109, 110 comprises frequency adjustment electrodes 124. The sense blocks 109, 110 convert the sense mode oscillations induced by the Coriolis force into electrical signals.

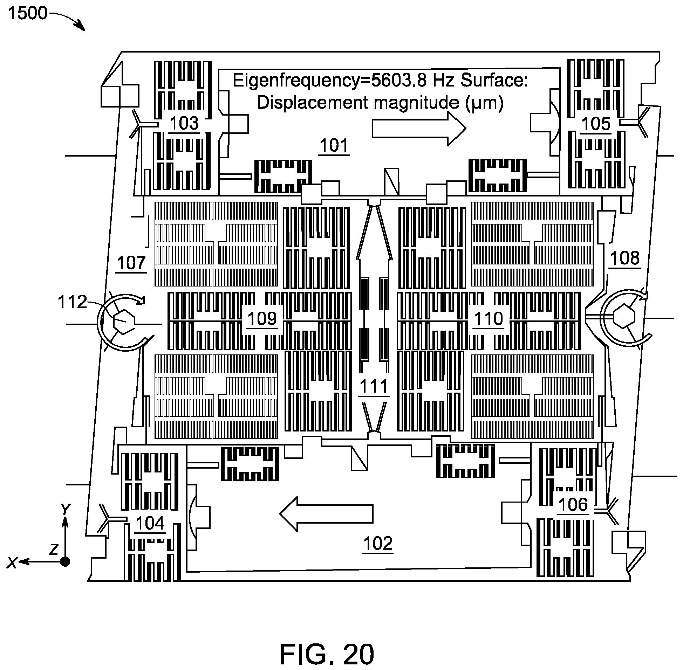

Figure 19 is a schematic representation illustrating the drive motion fully decoupled from the sense motion; Figure 20 illustrates finite element method (FEM) electrotechnical modelling of the drive motion.

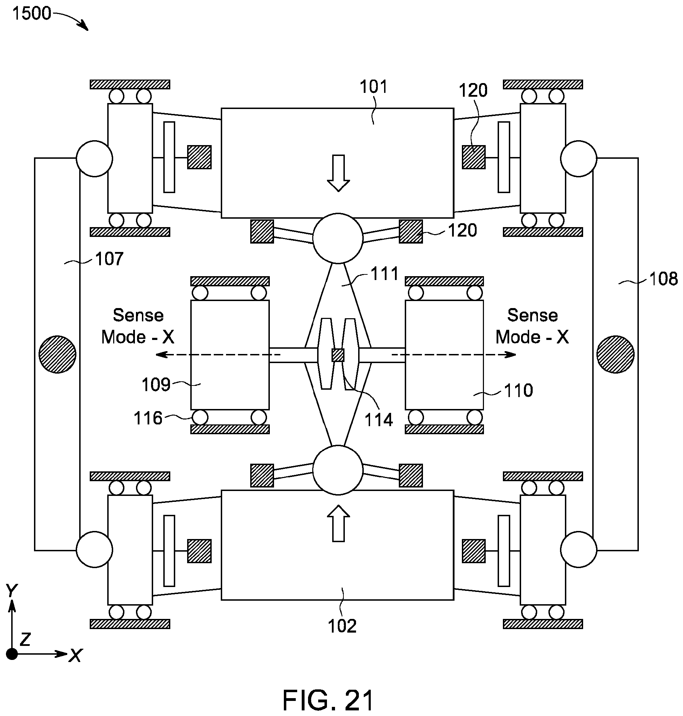

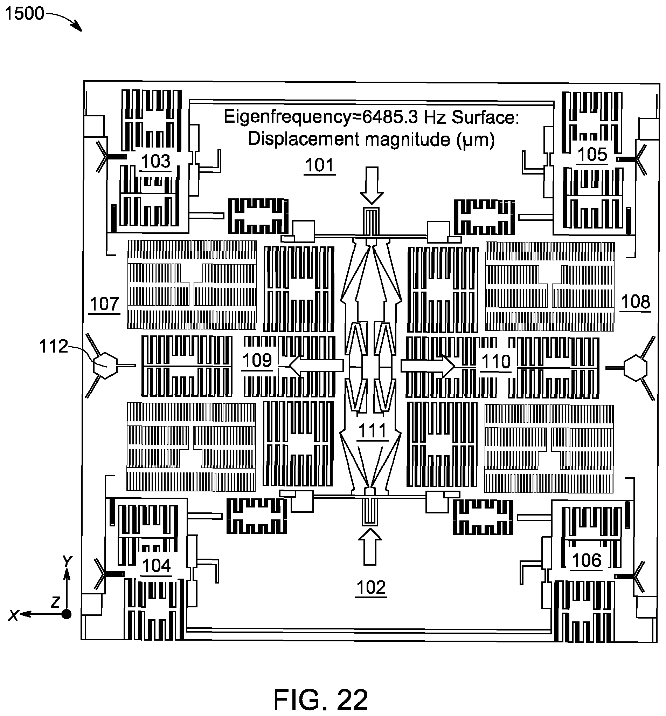

Figure 21 is a schematic representation of the sense motion fully decoupled from the drive motion; Figure 22 illustrates finite element method (FEM) electrotechnical modelling of the sense motion.

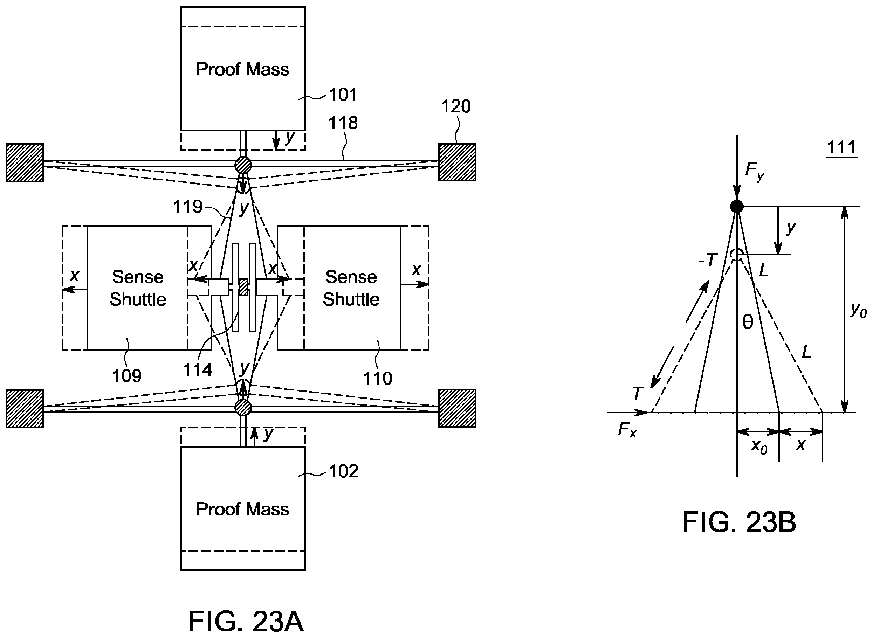

Figures 23A represent the motion converter 111 whilst Figure 23B show the equilibrium of forces. Figures 23A shows the conversion and amplification of the Coriolis-induced Oy-movement of the proof masses 101, 102 into Ox-movement of the sense masses. Figure 23B illustrates the geometry of the central spring system before (solid lines) and after (dashed lines) being displaced by the Coriolis force. Only the upper half of the central spring system is shown.

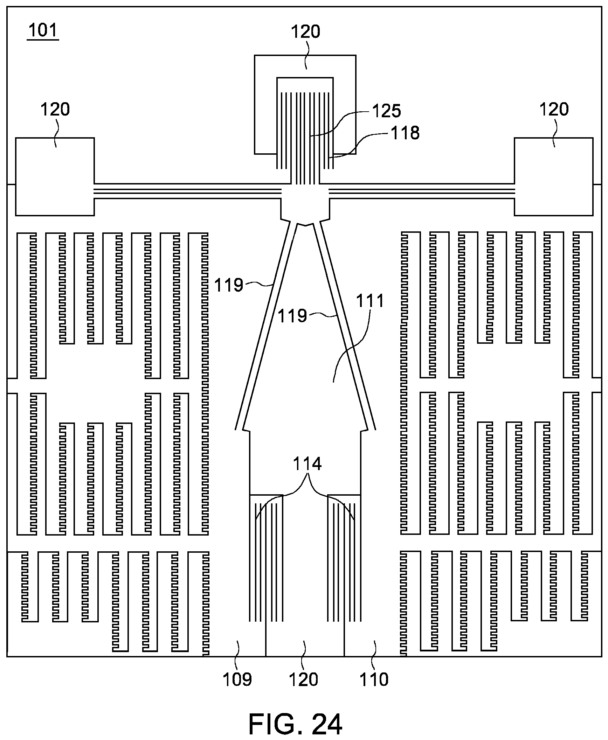

Figure 24 shows how a proof mass push-pull flexure 118 rigidly connects to the proof mass push-pull flexure 125, proof mass Oy-guiding flexure 118 and mechanical converter springs 119.

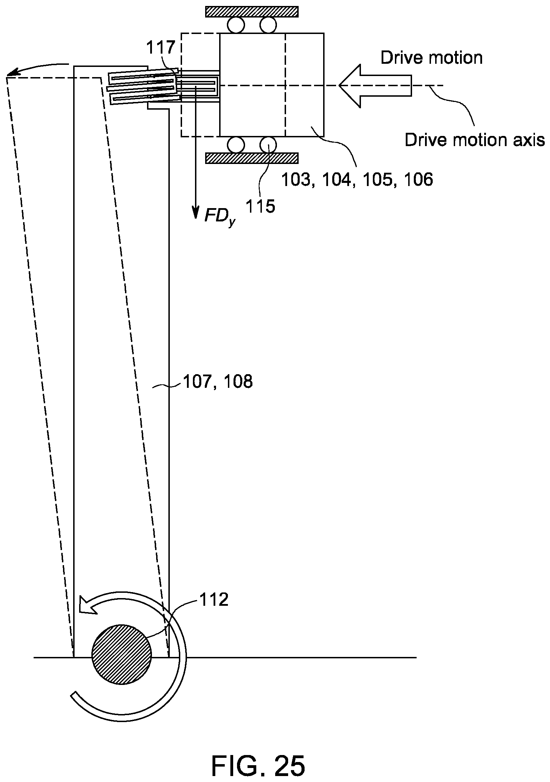

Figure 25 is a schematic illustration of residual error movement at the end of a drive mode lever 107, 108. The movement is shown about the fixed pivot 112 of the drive mode lever(s) 107, 108. The mechanical decoupler 117 is located between the drive blocks 103-16 and the drive mode lever 107, 108. Drive mode Ox-guiding flexure 115 blocks the Oy-movement of the drive blocks 103, 104, 105 and 106.

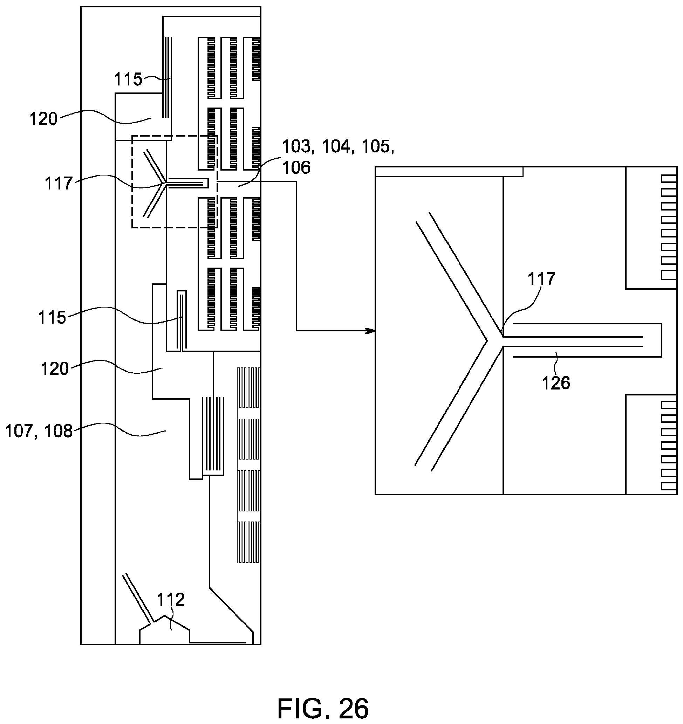

Figure 26 shows an example implementation of a drive mode lever 107, 108. As can be seen in this example, the mechanical decoupler 117 is star shaped, comprising 3 springs, including a three-pronged/Psi-shaped spring. The lever 107, 108 also includes a star-shaped fixed pivot 112.

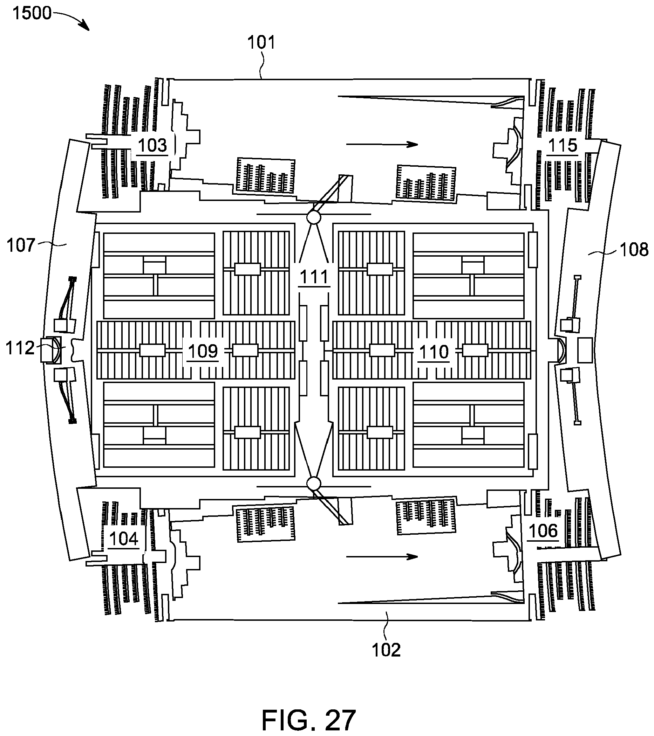

Figure 27 is a FEM illustration of the in-phase motion of the sensor 1500 according to the preferred embodiment.

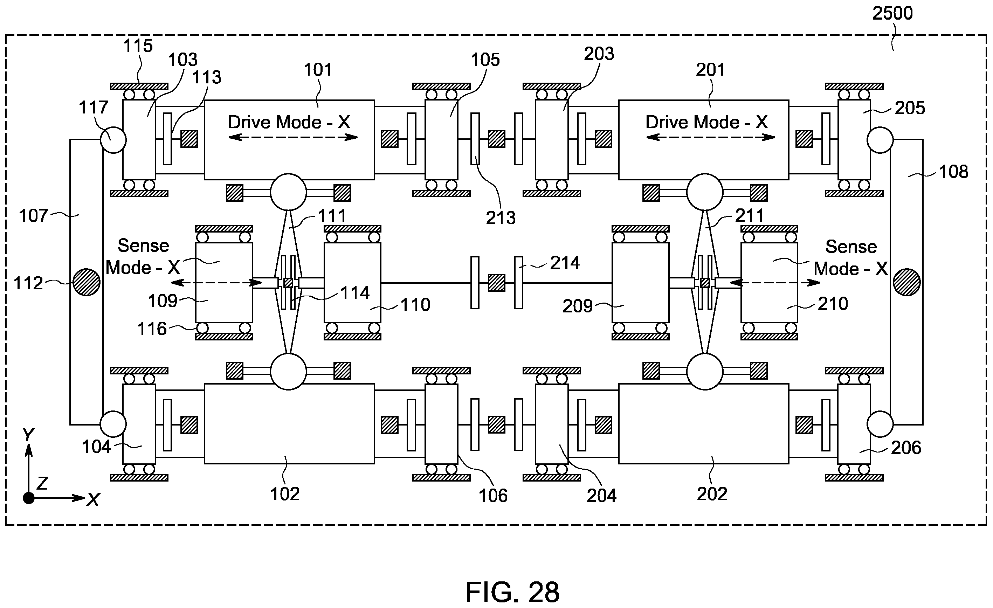

Figure 28 illustrates a further sensor 2500 in an embodiment similar to the sensor 1500 described above, but which includes 2 additional proof masses 201, 202, totalling four proof masses (i.e. a "quad-mass" embodiment). In addition, the sensor 2500 additionally includes drive mode shuttles 203-206, a second mechanical converter 211, additional drive more coupling springs 213 and additional sense mode coupling spring 214.

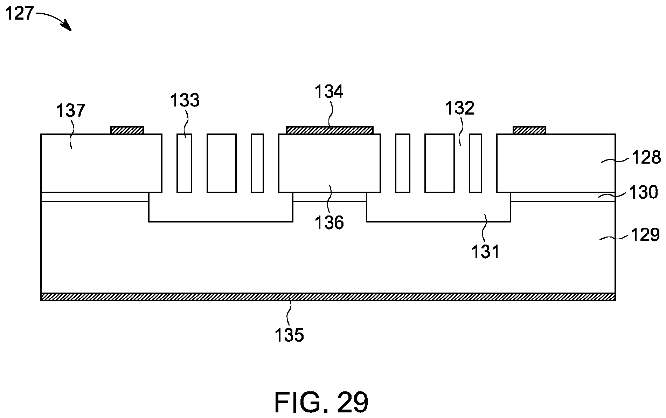

With reference to Figure 29, the angular rate sensor 1500, 2500 is manufactured in a Cavity-SOI (C-SOI) wafer 127. The buried oxide layer 130 (BOX) insulates the device layer 128 (i.e. the part of the C-SOI wafer in which the device is manufactured) from the handle-wafer (substrate) 129 of the C-SOI wafer (i.e. the part of the C-SOI wafer used as mechanical support for the device) on top of back side metal 135. A device cavity 131 is formed between pedestals/anchors 136 of the C-SOI wafer and the die frame 137, which have elements of metal on the front side of the device 134. Active structures 133 are formed on the front side DRIE 132. It will be appreciated that modifications to the angular rate sensor 1500, 2500 to accommodate different wafers are possible in alternative unillustrated embodiments.

### Reference numerals for the preferred embodiments (sensor 1500 - 2-mass device and sensor 2500 - 4-mass device)

101, 102 - Proof masses
103-106 - Drive mode shuttles
107, 108 - Drive mode levers
109, 110 - Sense mode shuttles
111 - Mechanical converter
112 - Fixed pivot of drive mode levers
113 - Drive mode springs
114 - Sense mode springs
115 - Drive mode Ox-guiding flexures
116 - Sense mode Ox-guiding flexures
117 - Mechanical decoupler
118 - Proof mass Oy-guiding Flexure
119 - Mechanical converter springs
120 - Anchors
121 - Drive mode actuation and detection electrodes
122 - Sense mode actuation and detection electrodes
123 - Quadrature error compensation electrodes
124 - Frequency adjust electrodes
125 - Proof mass push-pull flexure
126 - three-pronged/Psi-shaped spring
127 - CSOI wafer
128 - Device Layer
129 - Handle Wafer
130 - Buried Oxide (BOX)
131 - Cavity
132 - Front side DRIE
133 - Active structures
134 - Front side metal
135 - Back side metal
136 - Pedestal/Anchors
137 - Die frame
201, 202 - Proof masses
203-206 - Drive mode shuttles
209, 210 - Sense mode shuttles
211 - Mechanical converter
213 - Drive mode coupling springs
214 - Sense mode coupling springs

## Claims

1. A micro-electromechanical sensor, MEMS, device for measuring z-axis angular rate, the device comprising:
a substrate (129, 2000) defining a substrate plane and a z-axis perpendicular to the substrate plane;
a first vibratory structure comprising a first proof mass (21, 22, 101, 102, 201, 202) and a second proof mass (21, 22, 101, 102, 201, 202);
a second vibratory structure comprising a first sense mass and a second sense mass (31, 32, 109, 110, 209, 210),
the first and second proof masses (21, 22, 101, 102, 201, 202) each respectively having first and second drive structures (11, 12, 104, 105, 105, 203, 204, 205, 206) comprising first and second drive masses, respectively, said drive structures for generating drive-mode movements of said proof masses (21, 22, 101, 102, 201, 202) in drive-mode direction (x), the drive mode corresponding to the anti-phase movement of said proof masses (21, 22, 101, 102, 201, 202);
wherein the first and second vibratory structures being elastically coupled to each other,
**characterised by** the device further comprising a mechanical structure (111) for amplifying a Coriolis-induced movement in the sense mode direction (y) of said proof masses (21, 22, 101, 102, 201, 202) and for converting said amplified Coriolis induced movement into movement of the sense masses (31, 32, 109, 110, 209, 210) in the drive-mode direction (x), wherein the in-phase sense movement of said proof masses (21, 22, 101, 102, 201, 202) is suppressed, the mechanical structure (111) comprising two pivots (118), two pairs of mechanical converter springs (119) and a lever pivotable about the z-axis, wherein each pair of mechanical converter springs (119) is respectively rigidly connected to one of said pivots (118), the mechanical converter springs (119) in each pair being rigidly connected at an angle from each other, the mechanical structure further comprising a mechanical decoupler for decoupling the drive and sense modes.

2. A MEMS device according to claim 1, wherein the mechanical structure comprises at least one in-phase suppressing element (107, 108).

3. A MEMS device according to claim 2, wherein said suppressing element comprises the lever (107, 108).

4. A MEMS device according to claim 3, wherein said suppressing element further comprises a spring (43, 45, 46).

5. A MEMS device according to any one of the preceding claims, wherein the mechanical decoupler (117) is pronged.

6. A MEMS device according to claim 5, wherein the mechanical decoupler (117) is three-pronged.

7. A MEMS device according to any one of the preceding claims, wherein the mechanical decoupler (117) comprises a decoupling spring (44).

8. A MEMS device according to claim 7, wherein the decoupling spring (44) is Psishaped spring (126).

9. A MEMS device according to any one of the preceding claims, wherein the drive and sense modes occur respectively parallel to the substrate plane (129, 2000).

10. A MEMS device according to any one of the preceding claims, wherein the first vibratory structure comprises electrodes (123) for quadrature error compensation.

11. A MEMS device according to any one of the preceding claims, wherein the second vibratory structure comprises a first plurality of electrodes for sense detection and a second plurality of electrodes for sense actuation.

12. A MEMS device according to any one of claims 1 to 10, wherein the second vibratory structure comprises a plurality of electrodes (121, 122, 123, 124) arranged to operate for a first time period as actuation electrodes, the same plurality of electrodes (121, 122, 123, 124) being arranged to operate for a second time period, shorter than the first time period, as detection electrodes.

13. A MEMS device according to any one of the preceding claims, wherein at least one of the drive structures comprises at least one spring (42, 43) for suppressing the movement of the at least one drive structure in sense mode direction (y).

14. A MEMS device according to any one of the preceding claims, wherein at least one of the drive structures comprises an anchor structure (72, 112), the anchor structure (72, 112) comprising at least one anchor (72, 112) for supressing the-in phase movement of the at least one drive structure.

15. A MEMS device according to claim 14, wherein the anchor structure (72) further comprises at least one anchor (71, 81) for suppressing the movement of the sense masses in the sense mode direction (y).

## Patentansprüche

1. MEMS (mikroelektromechanischer Sensor)-Vorrichtung, zur Messung der Winkelgeschwindigkeit in der z-Achse, wobei die Vorrichtung Folgendes umfasst:
ein Substrat (129, 2000), das eine Substratebene und eine z-Achse senkrecht zur Substratebene definiert;
eine erste Schwingungsstruktur, die eine erste Prüfmasse (21, 22, 101, 102, 201, 202) und eine zweite Prüfmasse (21, 22, 101, 102, 201, 202) umfasst;
eine zweite Schwingungsstruktur, die eine erste Messmasse und eine zweite Messmasse (31, 32, 109, 110, 209, 210),
wobei die erste und die zweite Prüfmasse (21, 22, 101, 102, 201, 202) jeweils eine erste und eine zweite Antriebsstruktur (11, 12, 104, 105, 105, 203, 204, 205, 206) aufweisen, die erste bzw. zweite Antriebsmassen umfassen, wobei die Antriebsstrukturen zur Erzeugung von Antriebsmodusbewegungen der Prüfmassen (21, 22, 101, 102, 201, 202) in Antriebsmodusrichtung (x), wobei der Antriebsmodus der Gegenphasenbewegung der Prüfmassen (21, 22, 101, 102, 201, 202) entspricht;
wobei die ersten und zweiten Schwingungsstrukturen elastisch miteinander gekoppelt sind,
**dadurch gekennzeichnet, dass** die Vorrichtung ferner eine mechanische Struktur (111) umfasst, um Verstärkung einer Coriolis-induzierten Bewegung in der Messmodusrichtung (y) der Prüfmassen (21, 22, 101, 102, 201, 202) und zum Umwandeln der verstärkten Coriolis-induzierten Bewegung in eine Bewegung der Messmassen (31, 32, 109, 110, 209, 210) in der Antriebsmodusrichtung (x), wobei die phasengleiche Messbewegung der Prüfmassen (21, 22, 101, 102, 201, 202) unterdrückt wird, wobei die mechanische Struktur (111) zwei Drehpunkte (118), zwei Paare mechanischer Konverterfedern (119) und einen um die z-Achse schwenkbaren Hebel umfasst, wobei jedes Paar mechanischer Konverterfedern (119) jeweils starr mit einem der Drehpunkte (118) verbunden ist, wobei die mechanischen Konverterfedern (119) in jedem Paar in einem Winkel zueinander starr verbunden sind, wobei die mechanische Struktur ferner einen mechanischen Entkoppler zum Entkoppeln der Antriebs- und des Messmodi umfasst.

2. MEMS-Vorrichtung nach Anspruch 1, wobei die mechanische Struktur mindestens ein phasengleiches Unterdrückungselement (107, 108) umfasst.

3. MEMS-Vorrichtung nach Anspruch 2, wobei das Unterdrückungselement den Hebel (107, 108) umfasst.

4. MEMS-Vorrichtung nach Anspruch 3, wobei das Unterdrückungselement ferner eine Feder (43, 45, 46) umfasst.

5. MEMS-Vorrichtung nach einem der vorhergehenden Ansprüche, wobei der mechanische Entkoppler (117) zackig ist.

6. MEMS-Vorrichtung nach Anspruch 5, wobei der mechanische Entkoppler (117) dreizackig ist.

7. MEMS-Vorrichtung nach einem der vorhergehenden Ansprüche, wobei der mechanische Entkoppler (117) eine Entkopplungsfeder (44) umfasst.

8. MEMS-Vorrichtung nach Anspruch 7, wobei die Entkopplungsfeder (44) eine Psi-förmige Feder (126) ist.

9. MEMS-Vorrichtung nach einem der vorhergehenden Ansprüche, wobei die Antriebs- und Messmodi jeweils parallel zur Substratebene (129, 2000) stattfinden.

10. MEMS-Vorrichtung nach einem der vorhergehenden Ansprüche, wobei die erste Schwingungsstruktur Elektroden (123) zur Quadraturfehlerkompensation umfasst.

11. MEMS-Vorrichtung nach einem der vorhergehenden Ansprüche, wobei die zweite Schwingungsstruktur eine erste Vielzahl von Elektroden zur Messerkennung und eine zweite Vielzahl von Elektroden zur Messbetätigung umfasst.

12. MEMS-Vorrichtung nach einem der Ansprüche 1 bis 10, wobei die zweite Schwingungsstruktur eine Vielzahl von Elektroden (121, 122, 123, 124) umfasst, die so angeordnet sind, dass sie für eine erste Zeitspanne als Betätigungselektroden betreiben, wobei die gleiche Elektroden (121, 122, 123, 124) so angeordnet sind, dass sie für eine zweite Zeitspanne, die kürzer als die erste Zeitspanne ist, als Erkennungselektroden betreiben.

13. MEMS-Vorrichtung nach einem der vorhergehenden Ansprüche, wobei mindestens eine der Antriebsstrukturen mindestens eine Feder (42, 43) umfasst, zur Unterdrückung der Bewegung der mindestens einen Antriebsstruktur in einer Messmodusrichtung (y).

14. MEMS-Vorrichtung nach einem der vorhergehenden Ansprüche, wobei mindestens eine der Antriebsstrukturen eine Ankerstruktur (72, 112) umfasst, wobei die Ankerstruktur (72, 112) mindestens einen Anker (72, 112) zur Unterdrückung der phasengleichen Bewegung der mindestens einen Antriebsstruktur umfasst.

15. MEMS-Vorrichtung nach Anspruch 14, wobei die Ankerstruktur (72) ferner mindestens einen Anker (71, 81) zur Unterdrückung der Bewegung der Messmassen in der Messmodusrichtung (y) umfasst.

## Revendications

1. Dispositif MEMS (capteur microélectromécanique) de mesure de la vitesse angulaire de l'axe z, le dispositif comprenant :
un substrat (129, 2000) définissant un plan de substrat et un axe z perpendiculaire au plan de substrat ;
une première structure vibratoire comprenant une première masse d'épreuve (21, 22, 101, 102, 201, 202) et une deuxième masse d'épreuve (21, 22, 101, 102, 201, 202) ;
une deuxième structure vibratoire comprenant une première masse de détection et une deuxième masse de détection (31, 32, 109, 110, 209, 210),
la première et la deuxième masse d'épreuve (21, 22, 101, 102, 201, 202) ayant respectivement une première et une deuxième structure d'entraînement (11, 12, 104, 105, 105, 203, 204, 205, 206) comprenant respectivement une première et une deuxième masse d'entraînement, lesdites structures d'entraînement pour générer des mouvements en mode d'entraînement desdites masses d'épreuve (21, 22, 101, 102, 201, 202) dans la direction du mode d'entraînement (x), le mode d'entraînement correspondant au mouvement en opposition de phase desdites masses d'épreuve (21, 22, 101, 102, 201, 202) ;
dans lequel la première et la deuxième structure vibratoire sont couplées élastiquement l'une à l'autre,
**caractérisé par le fait que** le dispositif comprend en outre une structure mécanique (111) pour amplifier un mouvement induit par Coriolis dans la direction du mode de détection (y) desdites masses d'épreuve (21, 22, 101, 102, 201, 202) et pour convertir ledit mouvement amplifié induit par Coriolis en mouvement des masses de détection (31, 32, 109, 110, 209, 210) dans la direction du mode d'entraînement (x), le mouvement de détection en phase desdites masses d'épreuve (21, 22, 101, 102, 201, 202) étant supprimé, la structure mécanique (111) comprenant deux pivots (118), deux paires de ressorts de conversion mécaniques (119) et un levier pouvant pivoter autour de l'axe z, chaque paire de ressorts de conversion mécanique (119) étant respectivement reliée rigidement à l'un desdits pivots (118), les ressorts de conversion mécanique (119) de chaque paire étant reliés rigidement à un angle l'un par rapport à l'autre, la structure mécanique comprenant en outre un découpleur mécanique pour découpler le mode d'entraînement et le mode de détection.

2. Dispositif MEMS selon la revendication 1, dans lequel la structure mécanique comprend au moins un élément de suppression en phase (107, 108).

3. Dispositif MEMS selon la revendication 2, dans lequel ledit élément de suppression comprend le levier (107, 108).

4. Dispositif MEMS selon la revendication 3, dans lequel ledit élément de suppression comprend en outre un ressort (43, 45, 46).

5. Dispositif MEMS selon l'une quelconque des revendications précédentes, dans lequel le découpleur mécanique (117) est à dents.

6. Dispositif MEMS selon la revendication 5, dans lequel le découpleur mécanique (117) est à trois branches.

7. Dispositif MEMS selon l'une quelconque des revendications précédentes, dans lequel le découpleur mécanique (117) comprend un ressort de découplage (44).

8. Dispositif MEMS selon la revendication 7, dans lequel le ressort de découplage (44) est un ressort en forme de Psi (126).

9. Dispositif MEMS selon l'une quelconque des revendications précédentes, dans lequel le mode d'entraînement et le mode de détection se produisent respectivement parallèlement au plan de substrat (129, 2000).

10. Dispositif MEMS selon l'une quelconque des revendications précédentes, dans lequel la première structure vibratoire comprend des électrodes (123) pour la compensation d'erreur de quadrature.

11. Dispositif MEMS selon l'une quelconque des revendications précédentes, dans lequel la deuxième structure vibratoire comprend une première pluralité d'électrodes pour la détection de sens et une deuxième pluralité d'électrodes pour l'actionnement de détection.

12. Dispositif MEMS selon l'une quelconque des revendications 1 à 10, dans lequel la deuxième structure vibratoire comprend une pluralité d'électrodes (121, 122, 123, 124), agencée pour fonctionner pendant une première période de temps en tant qu'électrodes d'actionnement, cette même pluralité d'électrodes (121, 122, 123, 124) étant agencée pour fonctionner pendant une deuxième période de temps plus courte que la première, en tant qu'électrodes de détection.

13. Dispositif MEMS selon l'une quelconque des revendications précédentes, dans lequel au moins une des structures d'entraînement comprend au moins un ressort (42, 43) pour supprimer le mouvement de l'au moins une structure d'entraînement dans une direction du mode de détection (y).

14. Dispositif MEMS selon l'une quelconque des revendications précédentes, dans lequel au moins une des structures d'entraînement comprend une structure d'ancrage (72, 112), la structure d'ancrage (72, 112) comprenant au moins un ancrage (72, 112) pour supprimer le mouvement en phase de l'au moins une structure d'entraînement.

15. Dispositif MEMS selon la revendication 14, dans lequel la structure d'ancrage (72) comprend en outre au moins un ancrage (71, 81) pour supprimer le mouvement des masses de détection dans la direction du mode de détection (y).
